# EUROPEAN PATENT APPLICATION

(11) **EP 1 187 387 A1**
(43) Date of publication of application: **13.03.2002**
(21) Application number: 00402476.6
(22) Date of filing: 08.09.2000
(51) Int. Cl.: H04L 5/06

(54) **Multicarrier GSM receiver**

(71) Applicant: ALCATEL, 75008 Paris (FR)
(72) Inventor: Parisel, Arnaud, 75017 Paris (FR); Dugast, Xavier, 78400 Chatou (FR)
(74) Representative: Lamoureux, Bernard

(57) **Abstract**

In order to allow a mobile receiver to receive simultaneously on a plurality of carrier frequencies, particularly within the GSM system, the received signals are first transposed to baseband, and each of them is then processed independently of the others.

## Description

### FIELD OF THE INVENTION

The present invention relates to a method and a system for processing a multicarrier channel, said channel including a plurality of slots transmitted in different carriers, used in cellular digital communication systems wherein typically a mobile phone set is used.

The invention provides substantial hardware simplification in the mobile receiver stage by avoiding the use of two RF down convertion hardware paths.

The method is of special application in, but not limited to, the European digital mobile communications system known as GSM, i.e. Global System for Mobile Communications.

### BACKGROUND OF THE INVENTION

Based on the known techniques, a mobile subscriber roams in a cell under the coverage of a base station, in order to enter into the system and be located. Once the location is determined, the mobile subscriber can receive paging messages, or initiate outgoing calls. In the first case, the mobile set answers to the paging, and then the incoming call requirements are sent to the mobile set using the signaling channels of the communication system. If the call is outgoing from the mobile set, the latter indicates the traffic requirements of the channel depending on the characteristics of the call.

In either case, the base station sends back a signal message, with the allocation of the traffic channel. The channel thus allocated includes a carrier identity and a slot identity. Therefore, when the allocation is confirmed, the reception radio stage of the mobile must be tuned to the allocated channel during an assigned time slot. The receiver of the mobile set has a tuner block for tuning to carriers.

If the required service to complete the call, known as data call, needs more bandwidth than the one served by a single time slot, a multisolt channel can be allocated.

In the present GSM state-of-the art, the multislot-multicarrier channels, are not used. Nevertheless it is expected that such kind of channels be used in the future, in particular in the GSM-EDGE phase 2.

### DESCRIPTION OF THE INVENTION

The solution proposed by the present invention is based on direct transposition of all carriers in base band and then process each carrier independently. The invention is further characterized by the use of a broadband receiver, that detects all the radio signals located inside the multicarrier spectrum used. Said spectrum in the case of GSM, for example, could be four normal carriers (ie 800kHz). Said spectrum is then transposed to a lower band, known as the base band. Once transposed, the signal is processed and filtered in order to detect the pre-assigned multislot-multicarrier channels.

Accordingly, one object of the present invention is that providing a method for processing of digital radio channels in multicarrier radio communications applications, said carriers forming a spectrum allocated to be used for communication, comprising the steps of:
- transposition of said spectrum by in a base-band; and
- processing of each carrier independently.

According to an aspect of the invention, said processing of each carrier independently comprises the steps of:
- transposition of each carrier in base band;
- base band filtering;
- digital signal processing.

Another object of the present invention is that of providing a mobile phone set for use in cellular digital radio communications applications, wherein said mobile phone is adapted for operating with multicarrier channels.

According to another aspect of the present invention, said mobile phone set comprises a filtering block tuned to a whole spectrum of said multicarrier channels which is in GSM N*200kHz, N being the number of carriers of the multicarrier configuration.

According to still another aspect of the present invention, said filtering block comprises a broad-band filter.

According to yet another aspect of the present invention, said mobile phone set has a reception stage adapted for transposing a pre-filtered spectrum to a base band.

According to still a further aspect of the present invention, said reception stage is adapted for filtering a carrier in base band.

### BRIEF DESCRIPTION OF THE DRAWINGS

The present invention will be better understood by way of the following detailed description and the aid of the accompanying figures.

Figure 1 shows a general concept of multicarrier communications.

Figure 2 is a schematic view of a transposition process.

Figure 3 is a schematic block diagram of an example of a preferred embodiment of the invention.

### EXAMPLE OF A PREFERRED EMBODIMENT

As it is known in the related art, a mobile cellular radio communication system comprises a set of base station transceivers (BTS ), linked to the network backbone using a number of base station controllers (BSC). The BSCs are linked to the backbone using digital exchanges, or the so called mobile switching centers. The operation of roaming is carried out in a core controller means known as home location register. In each given cell, the mobile subscribers can roam. The BSC is the node that handles the radio resources.

The BTSs use a set of carriers from the ones available in the communications system; for example in the GSM case, from a total of 124 carriers. From these carriers, one is allocated to a respective mobile set in each call, and inside the respective carrier a time slot is assigned as well; for example one out of 8 in the GSM case. The BST, issues allocation messages which are received by the roaming mobile sets. These allocation messages allocate in each of the mobile sets a channel composed by a carrier identity and a slot identity.

From this moment, the mobile will use this channel for voice or data services. By doing so, the tuner module in the reception stage of the mobile set, is commanded so as to filter in the reception path the assigned carrier, in order to detect the assigned time slot and to demodulate the contained information.

The traffic channel in a TDM System, such as GSM, is a time slot inside a carrier. However for data services, a multisolt channel may be assigned. This multislot channel may use the same carrier, and in this case the receiver stage can operate in a similar manner as in the monoslot case, having the tuner locked to the assigned carrier during this multislot period.

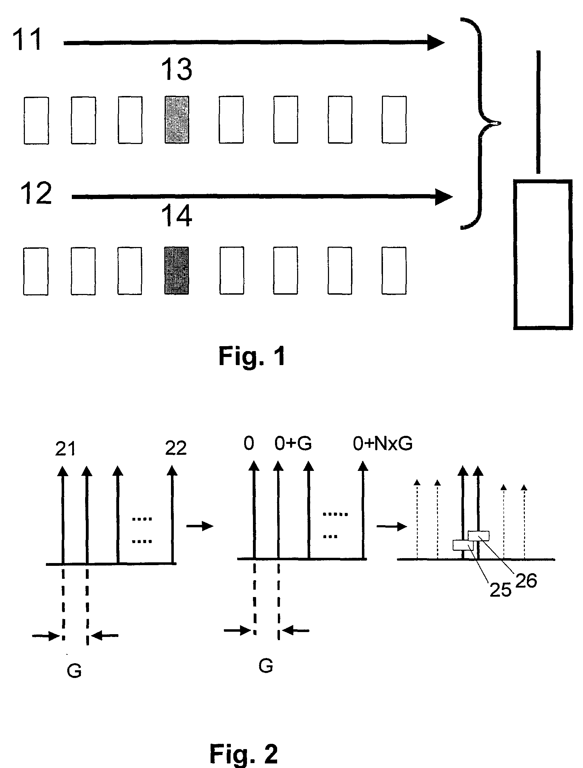

In the multicarrier case, the mobile station receives at the same time on several carriers (slots 13 and 14 in carriers 11 and 12 in the figure 1).

According to the solution proposed by the invention, a broad band filter stage is implemented in the receptor stage of the mobile phone set, after the antenna stage. Referring now to figure 2, it may be noted that the receptor stage by-passes all the spectrum used in the multicarrier configuration(for example 800kHz for a 4 carriers configuration in GSM) thus resulting to the spectrum 21-22 as shown in the left hand side of the figure. Then the signal is transponded to base band, this band being a parallel lower frequency band spectrum that begins in 0 Hz. The resulting spectrum 0, 0+G, ..., 0+NxG is shown in the middle part of figure 2 where G represents the width of the frequency channels and N the number of carriers.

Once transposed, the signal is processed and filtered within the mobile phone set in order to extract the appropriate transposed carrier, inside of which the allocated slots 25-26 are included.

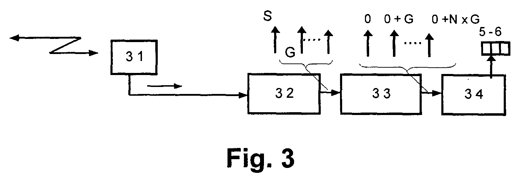

Referring now to figure 3, a block diagram is shown to schematically represent the receiver stage of the mobile phone set. In said figure a duplexor 31 is used to splice the received path from the transmitted path.

The received signal is then passed through a broad band filter 32 which passes the complete spectrum S of the signal having a frequency offset of G between respective carriers. Thereafter, a transposer means 33 transposes the received band to base-band, represented from 0 to 0xNxG in the figure, with N being the number of the carriers and G the frequency band between two adjacent carriers. Once transposed, the band is passed through further processing stages 34 in order to filter the allocated carriers, and the allocated slots 5-6 are therefore detected.

Therefore, it is appreciable that the system and the method of the present invention provide a substantial simplification in the overall signal processing of the mobile phone set, and as a consequence, provides a low cost solution.

## Claims

1. Method for processing of digital radio channels in multicarrier radio communications applications, said carriers (11; 12) forming a spectrum (S) allocated to be used for communication, **characterized in** comprising the steps of:
- transposition of said spectrum (S) by in a base-band; and
- processing of each carrier (11; 12) independently.

2. Method according to claim 1, wherein said processing of each carrier independently comprises the steps of:
- transposition of each carrier in base band;
- base band filtering; and
- digital signal processing.

3. A mobile phone set for use in cellular digital radio communications applications, **characterized in that** said mobile phone (M) is adapted for operating with multicarrier channels.

4. A mobile phone set according to claim 3, wherein said mobile phone set (M) comprises a filtering block (32) adapted for bypassing a whole spectrum of said multicarrier channels.

5. A mobile phone set according to claim 4, wherein said spectrum is of 800kHz for a 4 carriers configuration in GSM.

6. A mobile phone set according to claim 4, wherein said filtering block (32) comprises a broad-band filter.

7. A mobile phone set according to claim 3, wherein said mobile phone set has a reception stage adapted for transposing a pre-filtered spectrum to a base band.

8. A mobile phone set according to claim 7, wherein said reception stage is adapted for filtering a carrier in base band.
